Europäisches Patentamt

European Patent Office

Office européen des brevets

(19)

(11) Numéro de publication: **0 278 883**
**B1**

# (12) FASCICULE DE BREVET EUROPEEN

(45) Date de publication du fascicule du brevet:
**06.06.90**

(21) Numéro de dépôt: **88430004.7**

(22) Date de dépôt: **05.02.88**

(51) Int. Cl.⁵: **A44C 9/00**, G01B 3/34

(54) **Bague ouvrante et outil pour déterminer les dimensions du profil interne d'une telle bague.**

(30) Priorité: **06.02.87 FR 8701568**

(43) Date de publication de la demande:
**17.08.88 Bulletin 88/33**

(45) Mention de la délivrance du brevet:
**06.06.90 Bulletin 90/23**

(84) Etats contractants désignés:
**AT BE CH DE ES GB GR IT LI LU NL**

(56) Documents cités:
**GB-A- 394 909**
**US-A- 3 360 959**
**US-A- 3 385 079**
**US-A- 3 465 543**
**US-A- 3 566 616**
**US-A- 4 043 145**

(73) Titulaire: **Colliette, Bernard, 6, Place des Mûriers,
F-13320 Bouc-Bel-Air(FR)**

(72) Inventeur: **Colliette, Bernard, 6, Place des Mûriers,
F-13320 Bouc-Bel-Air(FR)**

(74) Mandataire: **Moretti, René et al, c/o Cabinet BEAU DE
LOMENIE "Prado-Mermoz" 232, Avenue du Prado,
F-13008 Marseille(FR)**

ACTORUM AG

## Description

La présente invention a pour objet une bague ouvrante et un outil pour déterminer les dimensions du profil interne d'une telle bague en fonction de la morphologie du porteur.

Le secteur technique de l'invention est celui de la bijouterie-joaillerie.

On connaît des bagues articulées qui, compte tenu de leur conception, peuvent être placées sur la phalange porteuse sans devoir être glissée autour de l'articulation du doigt lors de leur mise en place ou de leur retrait.

De telles bagues sont décrites dans les brevets US-A-3 465,543 et US-A-3 566,616 et trouvent notamment leur application dans le cas des personnes atteintes d'arthrite et dont la déformation des articulations de leurs doigts posent des difficultés pour la mise en place, le port et le retrait d'une bague classique à anneau fixe.

Il a été toutefois constaté que les bagues articulées connues, notamment celles qui comportent une garniture ornementale sur une partie seulement de la périphérie de l'anneau, ont une tendance à tourner autour du doigt du fait justement du poids de cette garniture.

Un objectif de la présente invention est d'apporter un perfectionnement à de telles bagues pour éviter tout retournement de la bague mise en place sur la phalange porteuse.

Un autre objectif est de proposer de nouveaux moyens de fermeture et de verrouillage d'une bague articulée.

Un autre objectif est de proposer un nouvel outil pour la prise de mesure de la bague selon l'invention.

Ces objectifs sont atteints par la bague ouvrante selon l'invention permettant de la placer sur la phalange porteuse sans être passée autour de l'articulation du doigt et comprenant une partie supérieure en forme d'arceau comportant une garniture ornementale et une partie inférieure ou corps de bague, articulées l'une à l'autre par une de leurs extrémités et comportant à l'autres des moyens de fermeture et de verrouillage desdites parties, caractérisée en ce que le profil interne du corps de bague qui entoure la phalange par le dessous est polygonal et comporte deux bords rectilignes latéraux sensiblement parallèles entre eux et reliés l'un à l'autre par au moins deux bords inclinés convergeant sur un point théorique situé dans le plan de symétrie de la bague et à la partie inférieure du corps de bague pour éviter tout retournement de la bague sous l'effet du poids de ladite garniture.

Dans un mode préférentiel de réalisation, lesdits bords inclinés sont reliés l'un à l'autre, à la partie inférieure du corps de bague, par un bord sensiblement perpendiculaire auxdits bords latéraux dudit corps de bague.

Lesdits bords inclinés comportent un bossage stabilisateur s'étendant sur leur longueur et destiné à exercer une légère pression sur la phalange en vue d'assurer le maintien en position de la bague sur le doigt, lesquels bossages sont d'une section droite d'une forme générale triangulaire.

Les moyens de fermeture de la partie supérieure en forme d'arceau et de la partie inférieure ou corps de bague se composent d'un élément mâle en forme de secteur cylindrique réservé à l'extrémité de l'une desdites parties et s'étendant transversalement sur tout ou partie de l'épaisseur de la bague, lequel élément mâle coopère avec une cavité cylindrique correspondante, ouverte latéralement et réservée à l'extrémité de l'autre partie et se présentant parallèlement à l'élément mâle, laquelle cavité est d'un profil fermé de telle sorte que les bords latéraux de son ouverture sont distants l'un de l'autre d'une valeur légèrement inférieure au diamètre dudit élément mâle pour obtenir la fermeture de la bague par agrafage.

Ladite cavité est réservée dans un siège en un métal ayant des qualités élastiques et rapporté dans l'extrémité de ladite partie composant la bague.

La partie supérieure en forme d'arceau et la partie inférieure, ou corps de bague, sont guidées l'une, l'autre par deux languettes sensiblement parallèles entre elles et attenantes à l'une desdites parties de la bague, lesquelles languettes s'étendent dans le prolongement des bords latéraux de l'une desdites parties pour guider l'autre lors de la fermeture de la bague et éviter tout gauchissement et toute usure prématurée de la fermeture et de son articulation.

Dans un mode de réalisation, l'extrémité du corps de bague comporte ladite cavité cylindrique et comporte en outre lesdites languettes de guidage, lesquelles prennent naissance aux extrémités de ladite cavité et s'étendent dans le prolongement des bords latéraux du corps de bague et du côté de la partie en forme d'arceau, laquelle comporte ledit élément mâle.

Lesdits moyens de verrouillage sont associés auxdits moyens de fermeture de la partie supérieure en forme d'arceau et de la partie inférieure, ou corps de bague, et se composent d'une barrette élastique articulée à l'une desdites parties pour coopérer avec un tenon en forme de boule fixé à l'autre, le verrouillage s'opérant par agrafage.

Selon l'invention, le profil interne de la bague est d'une forme générale polygonale dont la largeur est inférieure à la hauteur pour épouser la forme de la phalange porteuse.

L'outil pour la prise de mesure de ladite bague se caractérise en ce qu'il se compose de deux branches plates de même longueur, articulées à l'une de leurs extrémités et comportant à l'autre des moyens de guidage de l'une des branches, lesquelles branches comportent des bords rectilignes que se rejoignent sur l'axe de symétrie de l'outil. Lesdites branches comportent également plusieurs échancrures en augmentation progressive sur la longueur des branches et réservées le long desdits bords, lesquelles échancrures adoptent la forme d'un demi-profil interne de la bague, de telle sorte que lorsque les deux branches sont rejointes, les échancrures d'une branche correspondent exactement aux échancrures de l'autre pour former des ouvertures en augmentation progressive qui adoptent le profil interne de la bague. Lesdits moyens de guidage se composent de deux joues plates fixées de part et d'autre à l'une desdites branches et entre lesquelles joues se déplace l'autre branche.

Lesdites branches s'articulent autour d'un axe et entre deux disques, lesquels disques sont fixés à l'une des branches, dont l'une comporte une proéminence demi-circulaire concentrique audit axe et coopère avec une échancrure demi-circulaire correspondante de l'autre branche, les extrémités des branches formant des butées pour limiter l'ouverture desdites branches.

Les bords des butées qui viennent au contact l'un de l'autre lors de l'ouverture maximale des branches convergent sur l'axe d'articulation desdites branches.

Ledit outil comporte en outre au droit des moyens de guidage des branches, un organe de verrouillage monté pivotant pour, dans une position, immobiliser la branche mobile contre la branche fixe,ou dans son autre position permettre l'ouverture desdites branches.

Ledit organe adopte la forme générale d'un U allongé qui chevauche lesdites joues et qui est articulé par ses jambes à celles-ci, lequel organe est pivoté à l'extérieur de l'outil pour permettre l'ouverture des branches et se place, en position fermée de l'outil, dans des encoches réservées dans lesdites joues et à proximité de la branche mobile pour s'opposer à l'ouverture de celle-ci.

D'autres avantages et les caractéristiques de l'invention ressortiront encore à la lecture de la description suivante d'une bague ouvrante et de l'outil pour sa prise de mesures en référence au dessin annexé sur lequel :

- la figure 1 est une vue en élévation d'une bague ouvrante selon l'invention;
- la figure 2 est une section droite suivant la ligne II II de la figure 1;
- la figure 3 est une vue en coupe longitudinale des moyens de fermeture et de verrouillage qui équipent la bague de la figure 1;
- la figure 4 est une vue suivant la flèche F de la figure 3;
- la figure 5 est une vue en perspective illustrant les éléments qui composent les moyens de fermeture et de verrouillage de la bague;
- la figure 6 est une vue en élévation de l'outil pour la prise de mesures de la bague de la figure 1;
- la figure 7 est une vue partielle en perspective des moyens deguidage et de verrouillage de la branche mobile de l'outil de la figure 6;
- la figure 8 est une vue partielle en perspective des moyens d'articulation des branches dudit outil.

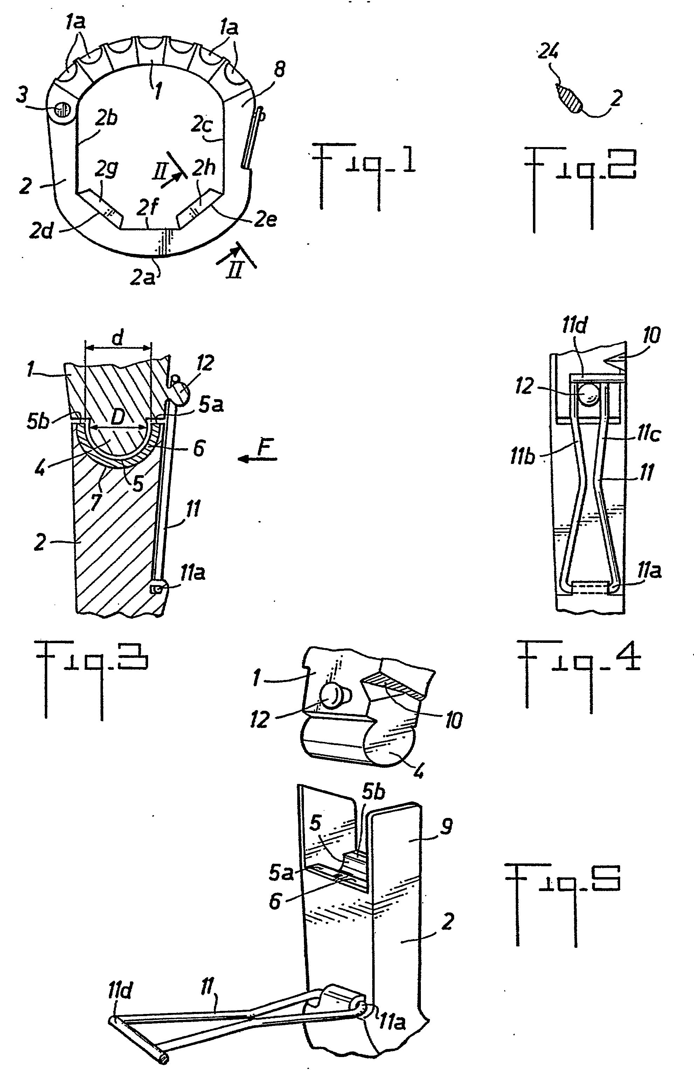

On se reporte d'abord à la figure 1.

Une bague selon l'invention comporte une partie supérieure 1 en forme d'arceau dans laquelle sont enchâssées des pierres précieuses 1a à sa périphérie extérieure pour former une garniture ornementale, laquelle partie 1 est articulée par une de ses extrémités à l'une des extrémités d'un corps de bague 2 constituant la partie inférieure de la bague autour d'un axe 3. A leur autre extrémité, les parties 1/2 comportent des moyens de fermeture et de verrouillage dont il sera question plus loin.

Le corps de bague 2 est formé pour entourer la phalange porteurse par le dessous et comporte, à sa partie extrême inférieure, un bord courbe 2a qui donne l'apparence, lorsque la bague est placée autour du doigt, d'une bague classique.

Pour éviter que la bague ne tourne autour de la phalange porteuse sous l'effet du poids de la garniture ornementale 1a, le profil interne du corps de bague est polygonal et comporte deux bords latéraux rectilignes et sensiblement parallèles entre eux 2b/2c, lesquels se prolongent vers le bas par deux bords inclinés 2d/2e convergeant sur un point théorique situé dans le plan de symétrie de la bague, lesquels bords 2d/2e sont reliés l'un à l'autre et à la partie inférieure du corps de bague par un autre bord 2f sensiblement perpendiculaire auxdits bords latéraux 2b/2c.

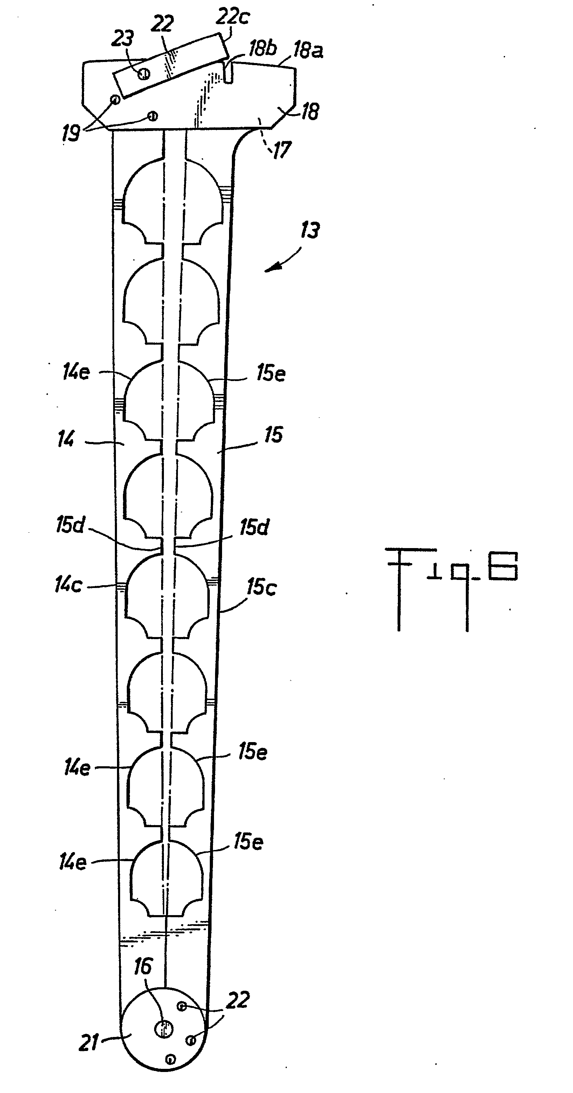

Les bords inclinés 2d/2c comportent des bossages stabilisateurs 2g/2h, lesquels s'étendent sur la longueur desdits bords et sont d'une section droite d'une forme générale triangulaire tel que cela est illustré à la figure 2 du dessin. Ces bossages 2g/2h sont de même hauteur et sont destinés à exercer une légère pression sur la phalange porteuse dans le but d'assurer le maintien en position de la bague sur le doigt. Leur action est associée à celle des deux bords rectilignes latéraux 2b/2c qui encadrent étroitement la phalange, l'ensemble ayant pour effet de s'opposer à tout retournement de la bague.

Comme on peut le voir à la figure 1, le profil interne de la bague est d'une forme générale polygonale dont la largeur est inférieure à la hauteur de telle sorte que la bague épouse au mieux la forme de la phalange porteuse.

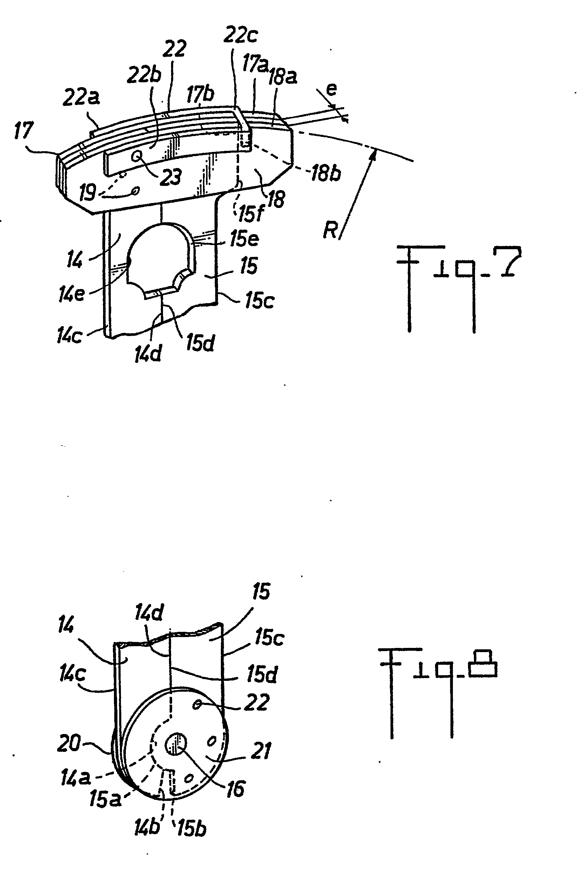

Les moyens de fermeture sont plus particulièrement illustrés aux figures 3 et 5 du dessin dans un mode possible de réalisation. L'extrémité libre de la partie en forme d'arceau 1 comporte un élément mâle 4 en forme de secteur cylindrique qui s'étend transversalement sur la quasi épaisseur de la bague, lequel élément 4 coopère avec une cavité cylindrique correspondante 5, ouverte latéralement et réservée à l'extrémité libre du corps de bague. Les génératrices du secteur cylindrique 4 et de la cavité 5 sont parallèles, de telle sorte que l'élément 4 peut pénétrer dans la cavité 5, laquelle est d'une longueur sensiblement supérieure à celle dudit secteur cylindrique 4.

La cavité cylindrique 5 est d'un profil fermé, c'est-à-dire que les bords latéraux 5a/5b de son ouverture rectangulaire sont distants l'un de l'autre d'une valeur d légèrement inférieure au diamètre D de l'élément mâle 4 pour obtenir la fermeture de la bague par agrafage.

Dans le but d'assurer une bonne tenue dans le temps desdits moyens de fermeture, la cavité 5 est réservée dans un siège 6 réalisé en un métal précieux ayant des qualités élastiques par exemple de l'or gris ou de l'or blanc.

Ledit siège 6 est rapporté dans l'extrémité libre du corps de bague et est fixé dans un logement cylindrique 7 pratiqué dans ladite extrémité.

Pour éviter tout gauchissement et toute usure prématurée de la fermetrue et de son articulation 3, le corps de bague 2 comporte deux languettes sensiblement parallèles entre elles 8/9, lesquelles languettes s'étendent dans le prolongement des bords latéraux du corps de bague et sont,en position fermée de la bague, attenantes aux extrémités du secteur cylindrique 4. Lesdites languettes 8/9 se placent de part et d'autre de l'élément 4, de telle sorte qu'elles prolongent les bords latéraux de la partie supérieure en forme d'arceau 1.

Celle-ci comporte en outre une saignée 10 destinée à être accrochée par un ongle pour obtenir l'ouverture de la bague.

Les moyens de verrouillage sont associés auxdits moyens de fermeture et se composent d'une barrette élastique 11, articulée au corps de bague 2 en 11a. Cette barrette est constituée par un fil de métal précieux par exemple de l'or d'une certaine élasticité et adopte la forme générale d'un X allongé. Les deux parties du fil 11b/11c sont reliées à leur extrémité opposée à la partie articulée 11a, par une tige 11d, laquelle déborde du côté de la partie du fil 11c pour permettre d'accrocher la barrette lors du déverrouillage. Celle-ci coopère avec un tenon en forme de boule 12, fixé à la partie en forme d'arceau 1, à l'extérieur de la bague et à proximité du secteur cylindrique 4. Les fils 11b/11c sont espacés l'un de l'autre d'une valeur légèrement inférieure au diamètre de la boule 12, de telle sorte que le verrouillage s'opère par agrafage.

On se reporte maintenant aux figures 6 à 8 qui illustrent un outil pour déterminer les dimensions du profil interne de la bague selon l'invention en fonction de la morphologie du porteur, lequel outil 13 se compose de deux branches plates de même longueur 14/15, lesquelles sont articulées à l'une de leurs extrémités autour d'un axe 16.

Les branches 14/15 sont d'une largeur qui croît légèrement 35 à partir de leur extrémité articulée,jusqu'à leur autre extrémité qui comporte des moyens de guidage de la branche mobile.

La branche 14 est fixe et comporte à son extrémité opposée à celle qui comporte l'articulation 16, deux joues plates 17/18 fixées de part et d'autre de la branche 14, par exemple au moyen de rivets 19. Les joues 17/18 sont d'une forme générale rectangulaire à extrémités biseautées et adoucies. Leur longueur est telle que la branche 15, qui est mobile, se déplace dans l'espace e réservé entre les joues (fig. 7). Leur bord longitudinal supérieur 17a/18a est courbe et de rayon R ayant pour centre l'axe 16.

L'articulation des deux branches 14/15 autour de l'axe 16 est réalisée entre deux disques 20/21 de même diamètre, lesquels disques sont fixés au moyen de rivets 22 à la branche mobile 15, laquelle comporte une proéminence demi-circulaire 15a concentrique audit axe 16 et coopère avec une échancrure demi-circulaire correspondante 14a de l'autre branche. Les extrémités des branches 14/15 recouvertes par les disques 20/21 forment des butées 14b/15b qui convergent sur l'axe 16. La pente des butées 14b/15b est déterminée en fonction de l'ouverture désirée des branches 14/15. En position ouverte maximale de l'outil, la branche mobile 15 demeure toujours entre les joues 17/18 des moyens de guidage.

Lesdites branches sont délimitées par des bords externes rectilignes 14c/15c qui divergent légèrement à partir de l'articulation 16 et par des bords rectilignes 14d/15d qui se rejoignent lors de la fermeture de l'outil sur son axe de symétrie.

Les bords 14d/15d comportent plusieurs échancrures 14e/15e, par exemple au nombre de huit qui adoptent la forme d'un demi-profil interne de la bague, de telle sorte que lorsque les deux branches 14/15 sont rejointes, les échancrures 14e de la branche 14 correspondent exactement aux échancrures 15e de la branche 15 pour former (fig. 7) des ouvertures qui adoptent le profil interne de la bague.

Les échancrures 14e/15e qui forment lesdites ouvertures sont en augmentation progressive sur la longueur des branches : de l'articulation 16 au joues de guidage 17/18.

L'outil comporte, en outre, au droit desdits moyens de guidage de la branche mobile 15, un organe de verrouillage 22 adoptant la forme d'un U allongé, lequel est monté pivotant autour d'un axe 23. L'organe 22 chevauche lesdites joues 17/18 et l'axe d'articulation 23 traverse ses jambes 22a/22b. Son extrémité 22c se présente perpendiculairement aux joues 17/18 et pénètre dans des encoches 17b/18b réservées dans lesdites joues. En position rabattue, l'extrémité 22c de l'organe 22 se place à proximité du bord 15f de la branche mobile 15 de l'outil fermé et maintient ladite branche 15 en appui sur la branche 14.

En basculant l'organe 22 vers l'extérieur, on libère la branche 15 ce qui autorise l'ouverture de l'outil.

Pour déterminer les dimensions du profil interne de la bague, l'outil est passé en position ouverte autour de la phalange destinée à recevoir la bague. L'opérateur procède par essais successifs jusqu'à ce que, en refermant l'outil et après verrouillage, l'orifice choisi s'adapte parfaitement au doigt du futur porteur. La bague est ensuite réalisée en fonction des dimensions relevées sur l'orifice retenu de l'outil.

Dans un mode de réalisation l'outil est réalisé en alliage d'aluminium.

**Revendications**

1. Bague ouvrante pour permettre de la placer sur la phalange porteuse sans être passée autour de l'articulation du doigt et comprenant une partie supérieure (1) en forme d'arceau comportant une garniture ornementale (1a) et une partie inférieure ou corps de bague (2) articulées l'une à l'autre par une de leurs extrémités et comportant à l'autre des moyens de fermeture (4/5) et de verrouillage (11) desdites parties, caractérisée en ce que le profil interne du corps de bague (2) qui entoure la phalange par le dessous est polygonal et comporte deux bords rectilignes latéraux (2b/2c) sensiblement parallèles entre eux, prolongés par au moins deux bords inclinés (2d/2e) convergeant sur un point théorique situé dans le plan de symétrie de la bague, lesquels bords inclinés (2d/2e) comportent en outre un bossage stabilisateur (2g/2h) s'étendant sur leur longueur et destiné à exercer une légère pression sur la phalange porteuse en vue d'éviter tout re-

tournement de la bague sous l'effet du poids de ladite garniture (1a) et ainsi assurer le maintien en position de la bague sur le doigt.

2. Bague selon la revendication 1, caractérisée en ce que lesdits bords inclinés (2d/2e) sont reliés l'un à l'autre à la partie inférieure du corps de bague (2) par un bord (2f) sensiblement perpendiculaire auxdits bords latéraux (2b/2c) du corps de bague.

3. Bague selon la revendication 1, caractérisée en ce que lesdits bossages (2g/2h) sont d'une section droite d'une forme générale triangulaire.

4. Bague selon l'une quelconque des revendications 1 à 3, dont les moyens de fermeture de la partie supérieure en forme d'arceau (1) et de la partie inférieur ou corps de bague (2) se composent d'un élément mâle en forme de secteur cylindrique (4) réservé à l'extrémité de l'une desdites parties (1/2) et s'étendant transversalement sur tout ou partie de l'épaisseur de la bague, lequel élément mâle coopère avec une cavité cylindrique correspondante (5), ouverte latéralement et réservée à l'extrémité de l'autre partie et se présentant parallèlement à l'élément mâle (4), caractérisée en ce que ladite cavité (5) est d'un profil fermé de telle sorte que les bords latéraux (5a/5b) de son ouverture sont distants l'un de l'autre d'une valeur (d) légèrement inférieure au diamètre (D) dudit élément mâle (4) pour obtenir la fermeture de la bague par agrafage, laquelle cavité (5) est réservée dans un siège (6) en un métal ayant des qualités élastiques et rapporté dans l'extrémité de ladite partie (2) composant la bague.

5. Bague selon l'une quelconque des revendications 1 à 4, caractérisé en ce que la partie supérieure en forme d'arceau (1) et la partie inférieure, ou corps de bague (2), sont guidées l'une, l'autre par deux languettes (8/9) sensiblement parallèles entre elles et attenantes à l'une desdites parties de la bague, lesquelles languettes (8/9) s'étendent dans le prolongement des bords latéraux de l'une desdites parties pour guider l'autre lors de la fermeture de la bague et éviter tout gauchissement et toute usure prématurée de la fermeture et de son articulation.

6. Bague selon la revendication 5, caractérisée en ce que l'extrémité du corps de bague (2) comporte ladite cavité cylindrique (5) et comporte en outre lesdites languettes de guidage (8/9), lesquelles prennent naissance aux extrémités de ladite cavité (5) et s'étendent dans le prolongement des bords latéraux du corps de bague (2) et du côté de la partie en forme d'arceau (1), laquelle comporte ledit élément mâle (4).

7. Bague selon l'une quelconque des revendications 1 à 5, caractérisée en ce que lesdits moyens de verrouillage sont associés auxdits moyens de fermeture de la partie supérieure en forme d'arceau (1) et de la partie inférieure, ou corps de bague (2), et se composent d'une barrette élastique (11) articulée à l'une desdites parties pour coopérer avec un tenon en forme de boule (12) fixé à l'autre, le verrouillage s'opérant par agrafage.

8. Bague selon l'une quelconque des revendications 1 à 7, caractérisée en ce que son profil interne est d'une forme générale polygonale dont la largeur est inférieure à la hauteur pour épouser la forme de la phalange porteuse.

9. Outil pour déterminer les dimensions du profil interne de la bague selon l'une quelconque des revendications 1 à 8, en fonction de la morphologie du porteur, lequel outil se compose de deux branches plates de même longueur (14/15) articulées à l'une de leurs extrémités (16) et comportant à l'autre des moyens de guidage (17/18) de l'une des branches (15), lesquelles branches (14/15) comportent des bords rectilignes (14d/15d) qui se rejoignent sur l'axe de symétrie de l'outil, caractérisé en ce que lesdites branches (14/15) comportent plusieurs échancrures (14e/15e) en augmentation progressive sur la longueur des branches et réservées le long desdits bords (14d/15d), lesquelles échancrures (14e/15e) adoptent la forme d'un demi-profil interne de la bague, de telle sorte que lorsque les deux branches (14/15) sont rejointes, les échancrures (14e) d'une branche (14) correspondent exactement aux échancrures (15e) de l'autre (15) pour former des ouvertures en augmentation progressive qui adoptent le profil interne de la bague.

10. Outil selon la revendication 9, caractérisé en ce que lesdits moyens de guidage se composent de deux joues plates (17/18) fixées de part et d'autre à l'une desdites branches (14) et entre lesquelles joues (17/18) se déplace l'autre branche (15).

11. Outil selon la revendication 10, caractérisé en ce que les branches (14/15) s'articulent autour d'un axe (16) et entre deux disques (20/21), lesquels disques sont fixés à l'une des branches (15) dont l'une comporte une proéminence demi-circulaire (15a) concentrique audit axe (16) et coopère avec une échancrure demi-circulaire correspondante (14a) de l'autre branche (14), les extrémités (14b/15b) des branches formant des butées pour limiter l'ouverture desdites branches (14/15).

12. Outil selon la revendication 11, caractérisé en ce que les bords des butées (14b/15b) qui viennent au contact l'un de l'autre lors de l'ouverture maximale des branches (14/15) convergent sur l'axe d'articulation (16) desdites branches.

13. Outil selon la revendication 10, caractérisé en ce qu'il comporte au droit des moyens de guidage (17/18) des branches, un organe de verrouillage (22) monté pivotant pour, dans une position, immobiliser la branche mobile (15) contre la branche fixe (14) ou dans son autre position, permettre l'ouverture desdites branches (14/15).

14. Outil selon la revendication 13, caractérisé en ce que ledit organe (22) adopte la forme générale d'un U allongé qui chevauche lesdites joues (17/18) et qui est articulé par ses jambes à celles-ci, lequel organe (22) est pivoté à l'extérieur de l'outil pour permettre l'ouverture des branches (14/15) et se place, en position fermée de l'outil, dans des encoches (17b/18b) réservées dans lesdites joues (17/18) et à proximité de la branche mobile (15) pour s'opposer à l'ouverture de celle-ci.

**Patentansprüche**

1. Ring zum Öffnen, um ihn am Trägerfingerglied plazieren zu können, ohne um das Fingergelenk schieben zu müssen, umfassend einen bogenförmigen oberen Teil (1) mit einem Ornamentbesatz (1a) und einen unteren Teil oder Ringkörper (2), welche mit einem ihrer Enden aneinander angelenkt sind und am anderen Schließ- (4/5) und Verriegelungsmittel (11) für diese Teile umfassen, dadurch gekennzeichnet, daß das Innenprofil des Ringkörpers (2), das das Fingerglied auf der Unterseite umgibt, polygonal ist und zwei geradlinige Seitenränder (2b/2c) aufweist, die im wesentlichen parallel zueinander und durch mindestens zwei geneigte Ränder (2d/2e) verlängert sind, welche an einem in der Symmetrieebene des Ringes liegenden theoretischen Punkt zusammenlaufen und weiters einen Stabilisatorwulst (2g/2h) umfassen, der sich über ihre Länge erstreckt und einen leichten Druck auf das Trägerfingerglied ausüben soll, um zu vermeiden, daß sich der Ring unter der Wirkung des Gewichtes des Besatzes (1a) herumdreht, und um den Ring am Finger sicher in seiner Position zu halten.

2. Ring nach Anspruch 1, dadurch gekennzeichnet, daß die geneigten Ränder (2d/2e) im unteren Teil des Ringkörpers (2) über einen zu den Seitenrändern (2b/2c) des Ringkörpers im wesentlichen senkrechten Rand (2f) miteinander verbunden sind.

3. Ring nach Anspruch 1, dadurch gekennzeichnet, daß die Wülste (2g/2h) im allgemeinen dreieckförmigen Querschnitt haben.

4. Ring nach einem der Ansprüche 1 bis 3, bei dem die Schließmittel des oberen, bogenförmigen Teils (1) und des unteren Teils oder Ringkörpers (2) durch einen männlichen Teil in Form eines Zylinderausschnitts (4) gebildet sind, der am Ende eines der Teile (1/2) vorgesehen ist und sich quer über die gesamte Dicke des Ringes oder einen Teil davon erstreckt, welches männliche Element mit einer entsprechenden zylindrischen Aushöhlung (5), die auf einer Seite offen und am Ende des anderen Teils vorgesehen ist und zum männlichen Element (4) parallelläuft, zusammenwirkt, dadurch gekennzeichnet, daß die Aushöhlung (5) ein geschlossenes Profil hat, sodaß die Seitenränder (5a/5b) ihrer Öffnung um einen Wert (d) etwas geringer als der Durchmesser (D) des männlichen Elements (4) voneinander entfernt sind, um die Schließung des Ringes durch Einhaken zu bewirken, wobei die Aushöhlung (5) in einem Sitz (6) aus einem Metall mit elastischen Eigenschaften, der im Ende des den Ring bildenden Teils (2) eingelassen ist, vorgesehen ist.

5. Ring nach einem der Ansprüche 1 bis 4, dadurch gekennzeichnet, daß der obere, bogenförmige Teil (1) und der untere Teil oder Ringkörper (2) mittels zweier zueinander im wesentlichen paralleler und an je einem der Ringteile aufgesetzter Zungen (8 bzw. 9) geführt sind, welche Zungen (8/9) sich in Verlängerung der Seitenränder eines der Teile erstrecken, um den anderen Teil beim Schließen des Ringes zu führen und jegliches Verwinden und jegliche vorzeitige Abnützung der Schließe und ihrer Anlenkung zu vermeiden.

6. Ring nach Anspruch 5, dadurch gekennzeichnet, daß das Ende des Ringkörpers (2) die zylindrische Aushöhlung (5) umfaßt und weiters die Führungszungen (8/9) umfaßt, welche an den Enden der Aushöhlung (5) beginnen und sich in Verlängerung der Seitenränder des Ringkörpers (2) und auf der Seite des bogenförmigen Teils (1), der das männliche Element (4) trägt, erstrecken.

7. Ring nach einem der Ansprüche 1 bis 5, dadurch gekennzeichnet, daß die Verriegelungsmittel mit den Schließmitteln des oberen, bogenförmigen Teils (1) und des unteren Teils oder Ringkörpers (2) kombiniert sind und durch einen elastischen Bügel (11) gebildet sind, der an einem der Teile zwecks Zusammenwirkens mit einem am anderen Teil befestigten kugelförmigen Zapfen angelenkt ist, wobei die Verriegelung durch Einhaken erfolgt.

8. Ring nach einem der Ansprüche 1 bis 7, dadurch gekennzeichnet, daß sein Innenprofil von im allgemeinen polygonaler Form ist, wobei die Breite geringer als die Höhe ist, um sich an die Form des Trägerfingergliedes anzuschmiegen.

9. Werkzeug zur Bestimmung der Dimensionen des Innenprofils des Ringes nach einem der Ansprüche 1 bis 8 in Abhängigkeit von der Morphologie des Trägers, welches Werkzeug durch zwei flache Teile (14/15) gleicher Länge gebildet ist, die an einem ihrer Enden (16) gelenkig verbunden sind und am anderen Führungsmittel (17/18) für einen der Teile (15) umfassen, welche Teile (14/15) geradlinige Ränder (14d/15d) aufweisen, die in der Symmetrieachse des Werkzeugs zusammenlaufen, dadurch gekennzeichnet, daß die Teile (14/15) mehrere Ausnehmungen (14e/15e) von progressiv zunehmender Größe über die Länge der Teile und entlang der Ränder (14d/15d) vorgesehen umfassen, welche Ausnehmungen (14e/15e) die Form eines halben Innenprofils des Ringes annehmen, sodaß bei Zusammenbringen der beiden Teile (14/15) die Ausnehmungen (14e) eines Teils (14) genau zu den Ausnehmungen (15e) des anderen (15) passen und so Löcher von progressiv zunehmender Größe bilden, die das Innenprofil des Ringes aufweisen.

10. Werkzeug nach Anspruch 9, dadurch gekennzeichnet, daß die Führungsmittel durch zwei flache Backen (17/18) gebildet sind, die auf beiden Seiten an einem der Teile (14) befestigt sind und zwischen welchen Backen (17/18) der andere Teil (15) bewegbar ist.

11. Werkzeug nach Anspruch 10, dadurch gekennzeichnet, daß die Teile (14/15) um eine Achse (16) gelenkig und zwischen zwei Scheiben (20/21) angeordnet sind, welche Scheiben an einem der Teile (15) befestigt sind und von denen eine einen zur Achse (16) konzentrischen halbkreisförmigen Vorsprung (15a) aufweist und mit einer entsprechenden halbkreisförmigen Ausnehmung (14a) des anderen Teils (14) zusammenwirkt, wobei die Enden (14b/15b) der Teile Anschläge zur Begrenzung der Öffnung der Teile (14/15) bilden.

12. Werkzeug nach Anspruch 11, dadurch gekennzeichnet, daß die Ränder der Anschläge (14b/15b), die beim maximalen Öffnen der Teile (14/15) miteinander in Kontakt gelangen, an der Anlenkachse (16) dieser Teile zusammenkommen.

13. Werkzeug nach Anspruch 10, dadurch gekennzeichnet, daß es an der Stelle der Führungsmittel (17/18) der Teile ein Verriegelungsorgan (22) umfaßt, das schwenkbar angeordnet ist, um in einer Position den beweglichen Teil (15) gegen den fixen Teil (14) zu immobilisieren oder in seiner anderen Position die Öffnung der Teile (14/15) zu gestatten.

14. Werkzeug nach Anspruch 13, dadurch gekennzeichnet, daß das Organ (22) im allgemeinen die Form eines länglichen U hat, das die Backen (17/18) überlappt und mit seinen Schenkeln an diesen angelenkt ist, welches Organ (22) nach außerhalb des Werkzeugs verschwenkt wird, um die Öffnung der Teile (14/15) zu gestatten, und sich in der geschlossenen Position des Werkzeugs in den Backen (17/18) und in in der Nähe des beweglichen Teils (15) vorgesehenen Kerben befindet, um ein Öffnen desselben zu verhindern.

## Claims

1. Openable finger ring which can be placed on the wearing phalanx without being slipped over the articulation of the finger and which comprises an arch-shaped upper part (1) provided with an ornementation (1a) and a lower part or ring body (2), mounted for pivoting one with respect to the other by one of their ends, the other end being equipped with means for closing (4/5) and for locking (11) said parts, characterized in that the inner profile of the ring body (2) which encircles the underpart of the phalanx is polygonal and comprises two substantially parallel rectilinear lateral edges (2b/2c), extended by at least two inclined edges (2d/2e) converging toward a theoretical point situated inside the plane of symmetry of the ring, said edges (2d/2e) further comprising a stabilizing projection (2g/2h) extending through their length and designed to exert a slight pressure on the wearing phalanx in order to prevent the ring from turning over under the weight of said ornementation (1a) and thus to fix the ring in position on the finger.

2. Finger ring according to claim 1, characterized in that said inclined edges (2d/2e) are interconnected at the lower part of the ring body (2) by an edge (2f) substantially perpendicular to said lateral edges (2b/2c) of the ring body.

3. Finger ring according to claim 1, characterized in that said projections (2g/2h) are of generally triangular cross-section.

4. Finger ring according to any one of claims 1 to 3, of which the arch-shaped means for closing the upper part (1) and the lower part or ring body (2) are composed of a male element shaped as a cylindrical sector (1) formed at the end of one of said parts (1/2) and extending crosswise over all or part of the thickness of the ring, which male element cooperates with a correspondingly cylindrical cavity (5), opened laterally and formed at the end of the other part, and presenting itself in parallel relationship to the male element (4), characterized in that said cavity (5) has a closed profile so that the lateral edges (5a/5b) of its opening are spaced apart of a distance (d) slightly shorter than the diameter (D) of said male element (4) in order to obtain the closure of the ring by fastening, said cavity (5) being formed in a seat (6) made from a metal exhibiting elastic properties and fitted in the end of said part (2) composing the ring.

5. Finger ring according to any one of claims 1 to 4, characterized in that the arch-shaped upper part (1) and the lower part, or ring body (2), are respectively guided by two substantially parallel plates (8/9) coupled to one of said parts of the ring, said plates (8/9) forming an extensin of the lateral edges of one of said parts for guiding the other during the closing of the ring and for preventing any warping and premature wearing of the closure and of its articulation.

6. Finger ring according to claim 5, characterized in that the end of the ring body (2) comprises said cylindrical cavity (5) and moreover said guiding plates (8/9), which plates begin at the ends of the cavity (5) and form an extension of the lateral edges of the ring body (2) on the side of the arch-shaped part (1), which latter comprises said male element (4).

7. Finger ring according to any one of claims 1 to 5, characterized in that said locking means are operationally coupled with said means for closing the arch-shaped upper part (1) and the lower part, or ring body (2), and are composed of a small elastic bar (11) hinged on one of said parts so as to cooperate with a ball-shaped tenon (12) fixed on the other part, locking being achieved by fastening.

8. Finger ring according to any one of claims 1 to 7, characterized in that its inner profile is of polygonal general shape, of width smaller than its height in order to adopt the shape of the wearing phalanx.

9. Tool for determining the inner profile of the finger ring according to any one of claims 1 to 8, as a function of the wearer's morphology, which tool is composed of two flat branches (14/15) articulated by one of their ends (16) and comprising at their other end, means (17/18) for guiding one of the branches (15), said branches (14/15) comprising rectilinear edges (14d/15d) joining up together on the axis of symmetry of the tool, characterized in that said branches (14/15) comprise a plurality of indentations (14e/15e) which become increasingly larger throughout the length of the branches and are provided along said edges (14d/15d), said indentations (14e/15e) adopting the shape of one half of the inner profile of the ring, so that when the two branches (14/15) are brought together, the indentations (14e) of one branch (14) correspond exactly to the indentations (15e) of the other branch (15), thereby forming apertures which become increasingly larger and adopt the inner profile of the ring.

10. Tool according to claim 9, characterized in that said guiding means are composed of two flat plates (17/18) fixed on either side to one of said branches (14) and between which plates (17/18) the other branch (15) can move.

11. Tool according to claim 10, characterized in that the branches (14/15) are pivotable about a pin (16) and between two disks (20/21), which disks are fixed to one of the branches (15), which one of said branches comprises a semi-circular protuberance (15a) concentric to said pin (16) and cooperating with a correspondingly semi-circular indentation (14a) of the other branch (14), the ends (14b/15b) of the branches forming stop means for limiting the opening of said branches (14/15).

12. Tool according to claim 11, characterized in that the edges of the stop means (14b/15b) which are contacting when the branches (14/15) are open to a maximum, converge toward the pivot pin (16) of said branches.

13. Tool according to claim 10, characterized in that it comprises, at right angles to the means (17/18) for guiding the branches, a pivotally mounted locking member (22) for, in a first position, immobilizing the movable branch (15) against the fixed branch (14), and in its other position, allowing the opening of said branches (14/15).

14. Tool according to claim 13, characterized in that said member (22) adopts the general shape of an elongated U straddling over the plates (17/18) and being articulated by its legs thereon, which member (22) is pivoted outside the tool to allow the opening of the branches (14/15) and fits, when the tool is in closed position, in notches (17b/18b) provided in said plates (17/18) and close to the movable branch (15) in order to oppose the opening thereof.

Fig.1

Fig.2

Fig.3

Fig.4

Fig.5

Fig.6

Fig_7

Fig_8